# FASCICULE DE BREVET EUROPEEN

(11) **EP 2 397 214 B1**
(45) Date de publication et mention de la délivrance du brevet: **09.08.2017**
(21) Numéro de dépôt: 11170140.5
(22) Date de dépôt: 16.06.2011
(51) Int. Cl.: B01D 53/50

(54) **Procédé d'épuration de fumées de combustion**
Verfahren zur Rauchgasaufbereitung
Method for purifying combustion fumes

(30) Priorité: 18.06.2010 FR 1054862
(43) Date de publication de la demande: 21.12.2011
(73) Titulaire: LAB SA, 69007 Lyon (FR)
(72) Inventeur: Siret, Bernard, 69200 Venissieux (FR); Tabaries, Franck, 83190 Ollioules (FR)
(74) Mandataire: Lavoix

(56) Documents cités:
- WO-A1-2004/026443
- US-A- 4 571 330
- US-A- 4 670 238
- US-A- 5 246 680
- US-A- 5 344 614
- US-A- 5 814 288

## Description

La présente invention concerne un procédé et une installation d'épuration de fumées issues de la combustion de déchets ou de combustibles fossiles.

L'incinération de déchets, tout comme la génération d'énergie par la combustion de combustibles fossiles, ont un intérêt majeur pour les sociétés modernes. Dans les deux cas, le processus de combustion génère des fumées qui sont trop chargées en polluants pour pouvoir être rejetées dans l'atmosphère sans traitement. Ces fumées contiennent en particulier des oxydes de soufre, dont le dioxyde de soufre (SO₂) et le trioxyde de soufre (SO₃), des acides halogénés, notamment de l'acide chlorhydrique (HCl), des poussières, des métaux lourds et des composés organiques plus ou moins toxiques, ainsi que des oxydes d'azote.

Plusieurs technologies sont utilisées pour épurer ces fumées de leurs polluants.

Les systèmes humides, dans lesquels on met en contact les fumées à traiter avec un liquide neutralisant, occupent une place de choix pour les centrales de production d'énergie. Ces procédés sont très efficaces mais couteux en investissement et génèrent un rejet aqueux qu'il faut traiter. Même après traitement, ce rejet à l'environnement n'est pas toujours possible.

Les procédés semi-secs, dans lesquels on pulvérise un liquide chargé en réactif de neutralisation dans une tour d'atomisation et on récupère le résidu sec de la réaction ainsi que les autres solides sur un filtre ou un électrofiltre, évitent le rejet d'eau. Ces procédés semi-secs sont efficaces mais, comme il faut que les fumées aient une température assez élevée pour permettre le processus d'atomisation, la récupération énergétique est limitée. Autrement dit, la production d'énergie n'est plus aussi poussée qu'elle pourrait l'être. De plus, les réacteurs d'atomisation sont volumineux et occupent une grande place au sol.

Les procédés secs, dans lesquels on met en contact les fumées à traiter avec un réactif pulvérulent qui va réagir avec les polluants acides et dans lesquels le produit de la réaction ainsi que les autres solides sont collectés dans un filtre à manches ou un électrofiltre, sont efficaces et relativement peu coûteux en investissement. Cependant, la réaction entre le réactif de neutralisation et les gaz acides, tels que le dioxyde de soufre et l'acide chlorhydrique, est incomplète. Un excès important de réactif est nécessaire. Cela se traduit par une quantité de réactif consommée plus importante que pour les procédés semi-secs ou les procédés humides, ainsi que par un volume important de résidus captés par le filtre ou l'électrofiltre. Or, ces résidus ont un caractère toxique et leur coût de mise en décharge est élevé. C'est pourquoi, puisque le réactif n'est pas complètement épuisé, on a cherché à le réutiliser par recirculation, après l'avoir réactivé. Ainsi, US-B-6 213 629, FR-A-2 883 772 et FR-A-2 911 518 proposent des aménagements pour recirculer, retraiter et/ou humidifier ces résidus.

En particulier, FR-A-2 883 772 propose un procédé de réactivation par de la vapeur d'eau, qui permet d'améliorer sensiblement les performances par rapport à une simple recirculation. D'autres améliorations visant à provoquer une condensation partielle d'eau sur le réactif sont proposées, par exemple dans DE-B-10 2005 058173, mais ne retraitent que le produit frais, et non l'ensemble avec le réactif recirculé.

Par ailleurs, traditionnellement, les procédés par voie sèche utilisent, comme réactif de neutralisation, de la chaux hydratée (Ca(OH)₂), qui est plus chère que la chaux vive (CaO) utilisée plus couramment dans les procédés semi-secs ou humides, avec préparation d'un lait de chaux.

De son côté, WO-A-2004/026443 propose de mélanger des résidus solides, séparés de fumées à épurer, avec de la chaux vive, en prévoyant une première phase de refroidissement forcé de ce mélange par de l'air et de l'eau, puis une seconde phase de mouillage par de la vapeur d'eau, qui est prévue particulièrement brève, avec une durée maximale de 30 secondes.

Le but de la présente invention est de proposer un procédé et une installation d'épuration par voie sèche améliorés, dont la consommation en réactif est abaissée.

A cet effet, l'invention a pour objet un procédé d'épuration de fumées de combustion, tel que défini à la revendication 1.

L'idée à la base de l'invention est d'activer les résidus recirculés par, à la fois, une incorporation d'oxyde alcalino-terreux et une exposition du mélange réactionnel en résultant à un flux gazeux contenant de la vapeur d'eau. En réalisant cette activation pendant une durée suffisante, on constate, de manière surprenante, des performances de réactivation significatives, même pour des quantités du réactif alcalino-terreux faibles. Bien entendu, dans la mesure où l'objectif de l'invention est de réactiver au maximum les résidus recirculés, on comprend que le mélange réactionnel de solides précité et son exposition à de la vapeur d'eau sont avantageusement réalisés à la plus haute température disponible possible : ainsi, par exemple, aucun refroidissement forcé des solides avant leur exposition à la vapeur n'est prévu. De cette façon, les réactions chimiques de réactivation sont favorisées thermiquement, en particulier en ce qui concerne leur cinétique, et induisent de réels effets de réorganisation sur les structures chimiques solides, notamment au niveau des grains de matière, en particulier par éclatement, craquage, etc. Autrement dit, l'invention promeut la réactivation des solides par des restructurations et des réactions solide-solide, lentes et favorisées par la température.

Des caractéristiques additionnelles avantageuses du procédé conforme à l'invention, prises isolément ou selon toutes les combinaisons techniquement possibles, sont spécifiées aux revendications dépendantes 2 à 10.

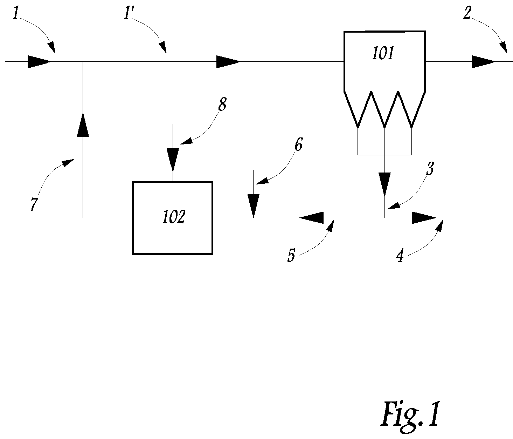

L'invention sera mieux comprise à la lecture de la description qui va suivre, donnée uniquement à titre d'exemple et faite en se référant à la figure 1 représentant schématiquement une installation d'épuration conforme à l'invention.

Sur la figure 1, des fumées à épurer 1, qui proviennent d'une unité de combustion, telle qu'un incinérateur de déchets ou une centrale de production d'énergie, et qui contiennent des polluants acides comme du dioxyde de soufre et/ou de l'acide chlorhydrique, sont introduites dans un séparateur gaz-solides 101, après mélange avec un flux 7 détaillé plus loin.

Le mélange 1' entre les fumées à traiter 1 et le flux 7 présente une température comprise entre 110 et 230°C, de préférence entre 130 et 160°C, quand il entre dans le séparateur 101.

A titre d'option non représentée, au moins un échangeur de chaleur, tel qu'un évaporateur ou récupérateur d'énergie, ne faisant pas l'objet de l'invention, peut être présent et contribuer à faire baisser la température du mélange 1' avant son introduction dans le séparateur 101.

En pratique, le séparateur 101 est d'une technologie connue en soi. De manière préférée, ce séparateur est un filtre à manches. En variante, il peut aussi être un électrofiltre ou un équipement similaire.

En sortie du séparateur 101, on récupère, d'une part, des fumées épurées 2 et, d'autre part, des résidus solides 3 contenant, entre autres, les solides présents dans les fumées à épurer 1, notamment des cendres volantes.

Une partie 4 des résidus solides collectés 3 est évacuée, tandis que la partie restante 5, qui représente entre 50 et 95% du débit total des résidus 3, est dirigée vers un réacteur d'activation 102.

Selon l'invention, un réactif de neutralisation 6 constitué d'oxyde alcalino-terreux, de préférence de chaux vive (CaO) et/ou de magnésie (MgO), est également introduit dans le réacteur 102. La quantité du réactif 6 alimentant le réacteur 102 représente avantageusement entre 2 et 25%, en masse, de la quantité totale de solides qui y est admise, de préférence entre 5 et 10% en masse.

De manière optionnelle et non représentée sur la figure 1, une quantité de ce ou ces oxydes alcalino-terreux constituant le réactif 6 est introduite immédiatement à l'amont du séparateur 101, en étant mélangé au mélange 1'.

Egalement de manière optionnelle, en plus du réactif d'oxyde(s) alcalino-terreux 6, d'autres constituants solides peuvent être introduits dans le réacteur 102, notamment, de manière non limitative, du charbon actif, du coke de lignite, des argiles, des zéolithes et/ou de la chaux éteinte.

Selon l'invention, un flux gazeux 8, contenant entre 25% et 100% de vapeur d'eau en volume, est également introduit au réacteur 102.

Dans ces conditions, des réactions chimiques connues se produisent alors dans le réacteur 102, dont les réactions suivantes :

(a) CaO + H₂O ⇒ Ca(OH)₂

(b) CaCl₂ + Ca(OH)₂ ⇒ 2Ca Cl(OH),

et

(c) CaCl₂ + CaO + H₂O ⇒ 2 Ca Cl(OH).

Certaines de ces réactions, en particulier la réaction a, sont très exothermiques et peuvent contribuer à faire éclater les grains solides et à régénérer ainsi leur surface. Dans le même temps, certaines de ces réactions, en particulier la réaction b, produisent un phénomène de réactivation et de régénération des résidus solides. De manière inattendue, la contribution des composés alcalino-terreux oxydés formant le réactif 6, comme la chaux vive, a un effet bénéfique important sur l'activité des résidus réactivés, vraisemblablement en lien avec la capacité de ces oxydes alcalino-terreux à dégager beaucoup de chaleur en surface des grains. En d'autres termes, la réactivation en présence d'oxyde alcalino-terreux est beaucoup plus efficace qu'une réactivation sans, comme quand elle est faite simplement avec de la vapeur d'eau ou faite avec de la vapeur d'eau et, par exemple, un ajout de chaux éteinte, c'est-à-dire d'hydroxyde de calcium (Ca(OH)₂).

Selon l'invention, le réacteur 102 est un contacteur gaz-solides, qui assure un temps de passage des solides compris entre 1 et 30 minutes, de préférence entre 5 et 10 minutes ou également de préférence entre 3 et 8 minutes. En pratique, le réacteur 102 est d'une technologie connue et peut être constitué, de préférence, d'une vis sans fin, d'un tambour rotatif ou d'un lit fluidisé. La vapeur du flux 8, entrant dans le réacteur 102, est éventuellement distribuée le long de la vis précitée.

Les résidus solides ainsi réactivés, qui sortent du réacteur 102, constituent le flux précité 7 et sont recyclés vers le séparateur 101. De la sorte, dans le mélange 1', les polluants acides des fumées à traiter 1 réagissent avec les résidus réactivés provenant du réacteur 102, notamment en étant fixés par ces résidus réactivés et en se mélangeant aux solides initialement présents dans les fumées 1.

De manière optionnelle, au moins une partie des gaz sortant du réacteur 102 est également recyclée vers le séparateur 101, en servant de gaz vecteurs pour le flux de solides 7. Ces gaz recyclés sont par exemple constitués d'une fraction du flux 8, n'ayant pas réagi dans le réacteur 102.

## Revendications

1. Procédé d'épuration de fumées de combustion, dans lequel :
- on fait traverser à des fumées à épurer (1) un séparateur gaz-solides (101),
- on admet, en entrée d'un réacteur d'activation (102), à la fois :
• une fraction (5) des résidus solides (3) issus du séparateur (101), cette fraction étant comprise entre 50 et 95% du débit total des résidus solides (3) issus du séparateur,
• un réactif (6) constitué d'oxyde alcalino-terreux, et
• un flux gazeux (8) contenant entre 25 et 100% de vapeur d'eau en volume,
le temps de passage des solides dans le réacteur (102), pendant lequel le mélange de ladite fraction de résidus solides (5) et dudit réactif (6) est exposé audit flux gazeux (8), étant compris entre 1 et 30 minutes, et
- on recycle vers le séparateur (101) les solides (7) issus du réacteur (102), en les mélangeant aux fumées à épurer (1) en amont du séparateur.

2. Procédé suivant la revendication 1, **caractérisé en ce que** le temps de passage des solides dans le réacteur (102) est compris entre 5 et 10 minutes.

3. Procédé suivant la revendication 1, **caractérisé en ce que** le temps de passage des solides dans le réacteur (102) est compris entre 3 et 8 minutes.

4. Procédé suivant l'une quelconque des revendications précédentes, **caractérisé en ce que** le réactif (6) constitué d'oxyde alcalino-terreux est de la chaux vive.

5. Procédé suivant l'une quelconque des revendications précédentes, **caractérisé en ce que** le réactif (6) constitué d'oxyde alcalino-terreux est de la magnésie.

6. Procédé suivant l'une quelconque des revendications précédentes, **caractérisé en ce que**, en plus des solides (7) issus du réacteur (102), on introduit du réactif constitué d'oxyde alcalino-terreux dans les fumées à épurer (1), en amont du séparateur (101).

7. Procédé suivant l'une quelconque des revendications précédentes, **caractérisé en ce que**, dans le réacteur (102), on admet en outre du charbon actif, du coke de lignite, des argiles, des zéolites, de la chaux éteinte ou un mélange de ces composés.

8. Procédé suivant l'une quelconque des revendications précédentes, **caractérisé en ce que** la quantité du réactif (6) admise dans le réacteur (102) représente entre 2 et 25% de la quantité totale de solides qui y est admise, de préférence entre 5 et 10%.

9. Procédé suivant l'une quelconque des revendications précédentes, **caractérisé en ce que** le séparateur (101) est un filtre à manches.

10. Procédé suivant l'une quelconque des revendications précédentes, **caractérisé en ce que** le réacteur (102) est une vis sans fin, un tambour rotatif ou un lit fluidisé.

## Patentansprüche

1. Verfahren zum Reinigen von Verbrennungsgasen, bei dem:
- die zu reinigenden Gase (1) durch einen Gas-Feststoffabscheider (101) hindurch geschickt werden,
- dem Eingang eines Aktivierungsreaktors (102):
• eine Fraktion (5) aus Restfeststoffen (3), die aus dem Abscheider (101) stammen, wobei diese Fraktion zwischen 50 und 95% des Gesamtdurchsatzes der vom Abscheider stammenden Restfeststoffe (3) umfasst,
• ein Reaktionsmittel (6), das von einem Erdalkalioxid gebildet wird,
• und ein Gasstrom (8), der zwischen 25 und 100 Volumen-% Wasserdampf enthält, zugleich zugeführt werden,
wobei die Durchgangszeit der Feststoffe in dem Reaktor (102), während der die Mischung aus der Fraktion aus Restfeststoffen (5) und dem Reaktionsmittel (6) dem Gasstrom (8) ausgesetzt ist, zwischen 1 und 30 Minuten liegt, und
- in dem Abscheider (101) die vom Reaktor (102) stammenden Feststoffe (7) recycelt werden, indem sie den zu reinigenden Gasen (1) vor dem Abscheider zugemischt werden.

2. Verfahren nach Anspruch 1, **dadurch gekennzeichnet, dass** die Durchgangszeit der Feststoffe in dem Reaktor (102) zwischen 5 und 10 Minuten liegt.

3. Verfahren nach Anspruch 1, **dadurch gekennzeichnet, dass** die Durchgangszeit der Feststoffe in dem Reaktor (102) zwischen 3 und 8 Minuten liegt.

4. Verfahren nach einem beliebigen der vorhergehenden Ansprüche,
**dadurch gekennzeichnet, dass** das aus Erdalkalioxid gebildete Reaktionsmittel ungelöschter Kalk ist.

5. Verfahren nach einem beliebigen der vorhergehenden Ansprüche,
**dadurch gekennzeichnet, dass** das aus Erdalkalioxid gebildete Reaktionsmittel (6) Magnesiumoxid ist.

6. Verfahren nach einem beliebigen der vorhergehenden Ansprüche,
**dadurch gekennzeichnet, dass** zusätzlich zu den aus dem Reaktor (102) stammenden Feststoffe (7) vor dem Abscheider (101) aus Erdalkalioxid gebildetes Reaktionsmittel in die zu reinigenden Gase (1) eingeführt wird.

7. Verfahren nach einem beliebigen der vorhergehenden Ansprüche,
**dadurch gekennzeichnet, dass** außerdem Aktivkohle, Braunkohlenkoks, Tone, Zeolite, gelöschter Kalk oder eine Mischung aus diesen Komponenten in den Reaktor (102) eingegeben werden.

8. Verfahren nach einem beliebigen der vorhergehenden Ansprüche,
**dadurch gekennzeichnet, dass** die Menge des dem Reaktor (102) zugefügten Reaktionsmittel (6) zwischen 2 und 25% der Gesamtmenge der dort zugeführten Feststoffe darstellt, vorzugsweise zwischen 5 und 10%.

9. Verfahren nach einem beliebigen der vorhergehenden Ansprüche,
**dadurch gekennzeichnet, dass** der Abscheider (101) ein Beutelfilter ist.

10. Verfahren nach einem beliebigen der vorhergehenden Ansprüche,
**dadurch gekennzeichnet, dass** der Reaktor (102) eine Förderschnecke, eine Drehtrommel oder eine Wirbelschicht ist.

## Claims

1. Method for purifying combustion fumes, in which:
- fumes to be purified (1) are passed through a gas-solid separator (101),
- the following are fed into a quench reactor (102) at the same time:
• a fraction (5) of the solid residues (3) discharged from the separator (101), this fraction amounting to between 50% and 95% of the total output of the solid residues (3) discharged from the separator,
• a reagent (6) formed from alkaline earth metal oxide, and
• a gaseous flux (8) containing between 25% and 100% by volume of steam,
wherein the flow time of the solids through the reactor (102), during which the mixture of said fraction of solid residues (5) and said reagent (6) is exposed to said gaseous flux (8), ranges between 1 and 30 minutes, and
- the solids (7) discharged from the reactor (102) are recirculated to the separator (101) by mixing them with the fumes to be purified (1) upstream of the separator.

2. Method according to claim 1, **characterised in that** the flow time of the solids through the reactor (102) ranges between 5 and 10 minutes.

3. Method according to claim 1, **characterised in that** the flow time of the solids through the reactor (102) ranges between 3 and 8 minutes.

4. Method according to any one of the preceding claims, **characterised in that** the reagent (6) formed from alkaline earth metal oxide is composed of quick lime.

5. Method according to any one of the preceding claims, **characterised in that** the reagent (6) formed from alkaline earth metal oxide is composed of magnesium.

6. Method according to any one of the preceding claims, **characterised in that** reagent formed from alkaline earth metal oxide is fed into the fumes to be purified (1) upstream of the separator (101) in addition to the solids (7) discharged from the reactor (102).

7. Method according to any one of the preceding claims, **characterised in that** activated carbon, lignite coke, clays, zeolites, slaked lime or a mixture of these compounds is additionally fed into the reactor (102).

8. Method according to any one of the preceding claims, **characterised in that** the quantity of reagent (6) fed into the reactor (102) represents between 2% and 25% of the total quantity of solids fed therein, preferably between 5% and 10%.

9. Method according to any one of the preceding claims, **characterised in that** the separator (101) is a bag filter.

10. Method according to any one of the preceding claims, **characterised in that** the reactor (102) is an endless screw, a rotary drum or a fluidised bed.
